# EUROPEAN PATENT SPECIFICATION

(11) **EP 3 650 214 B1**
(45) Date of publication and mention of the grant of the patent: **24.03.2021**
(21) Application number: 18205261.3
(22) Date of filing: 08.11.2018
(51) Int. Cl.: B32B 3/26, B32B 3/30, B32B 5/02, B32B 7/02, B32B 27/08, B32B 27/12, B32B 27/28

(54) **INSULATION MATERIAL FOR THERMAL AND/OR ACOUSTIC INSULATION**
ISOLATIONSMATERIAL ZUR THERMISCHEN UND/ODER AKUSTISCHEN ISOLATION
MATIÈRE ISOLANTE POUR ISOLATION THERMIQUE ET/OU ACOUSTIQUE

(43) Date of publication of application: 13.05.2020
(73) Proprietor: ArianeGroup GmbH, 82024 Taufkirchen (DE)
(72) Inventor: Jasjukevics, Arturs, 28199 Bremen (DE)
(74) Representative: Marschall, Stefan

(56) References cited:
- US-A1- 2014 287 641

## Description

The present invention concerns an insulation material for thermal and/or acoustic insulation, wherein the material comprises a plurality of layered sheets. The present invention further concerns a method for thermally and/or acoustically insulating an entity.

The exchange of thermal energy between physical systems may rely on different physical conditions implying respective heat transfer modes such as thermal conduction (resulting on microscopic collisions of particles), thermal radiation (being an electromagnetic radiation) and convection (where heat is transported by means of a moving fluid).

Thermal insulation materials are devised to suppress heat transfer of one or more of such modes. To provide for a particularly high efficiency in insulation, the materials may comprise various layers which may have different properties so as to inhibit or reduce heat transfer according to a respective mode.

For example, multi-layer insulation (MLI) materials, which are composed of a plurality of layered sheets, are particularly adapted to reduce thermal radiation. These materials are often used for thermal control and protection of spacecraft and launch vehicles. The plurality of layers includes thin films of plastic, such as polyester films or polyimide films. These films are typically coated with a metal such as silver or aluminium. Due to the coating, these layers reflect a large portion of heat, while only a fraction of it passes on to the respective next layer.

Such MLI materials are lightweight as compared to other materials. They currently exhibit the best thermal performance in vacuum, where they act as a multi-layer radiative barrier. Depending on application, an MLI material can be able to reflect more than 99% of the incoming radiative heat flux.

Polyimide films offer the best performance in terms of thermomechanical stability and are able to operate at temperatures up to 450°C. Such films, however, are laborious in production and therefore expensive. Moreover, conventional MLI materials are usually effective only in vacuum, where convection and conduction are negligible. In a gaseous atmosphere, they have little impact. Besides, MLI materials including polyimide films are subject to the "International Traffic in Arms Regulations" (ITAR), such that the application and trade thereof is complicated and restricted.

Document US 2017/326849 A1 discloses laminate panels including a polyimide-based aerogel layer which is fibre-reinforced to improve its mechanical strength.

It is an object of the present invention to provide an alternative insulation material and an alternative method of insulating, so as to overcome the above disadvantages.

The object is solved by an insulation material according to claim 1 and a method according to claim 10. Particular embodiments are disclosed in the dependent claims, in the description and in the figures.

An insulation material according to the present invention serves to provide thermal and/or acoustic insulation. It comprises a plurality of layered sheets including at least one flexible (i.e., bendable) polyimide aerogel film. Therein, said polyimide aerogel film is at least partially (i.e., in at least a portion of one or of both of its (opposite) surfaces) covered with a coating which is reflective to thermal radiation; in the following, this property is abbreviated by the expression "at least partially coated".

According to advantageous embodiments, the coating covers at least 50%, at least 75%, at least 90% or even 100% of the respective surface area. Preferably, the coating comprises a metal, in particular aluminium, silver and/or gold. For example, to provide for the coating, the respective surface may be metallised (e.g. by applying a physical vapour deposition method), such that the polyimide aerogel acts as a substrate for metallisation.

Like conventional metallised polyimide films traditionally included in certain insulation materials, such flexible and at least partially coated polyimide aerogel film provides for heat reflection.

A method according to the present invention serves for thermally or acoustically insulating an entity; in this document, the term "entity" may, in particular, refer to an object or to a creature such as a person. The method comprises partially or entirely shielding, covering and/or enveloping the entity with an insulation material according to an embodiment of the present invention.

Compared to conventionally used insulation materials such as MLI materials based on (conventional) polyimide films, polyimide aerogel provides an extremely low thermal conductivity and a little mass per volume. As a consequence, the present invention provides for an insulation material exhibiting an advantageous ratio of insulation performance and mass. Moreover, polyimide aerogel operates as a sound absorber.

In particular, by configuring the polyimide aerogel with a respective porosity, the insulation material according to the present invention can be configured to have a lower mass than a conventional insulation material (such as a conventional MLI material) having the same or even an inferior insulation performance as the inventive insulation material, or it may be configured to have a better insulation performance than a conventional insulation material having the same or even a higher mass.

An insulation material according to the present invention has a wide range of applicability, as it efficiently insulates both in gaseous environments, where the polyimide aerogel can act as a classical insulator (such as a foam or felt), and under vacuum conditions. Therefore, in its various embodiments, an insulation material according to the present invention can be utilised in miscellaneous fields, for example, in aerospace, aviation, civil engineering and automotive engineering as well as in the fields of cryogenics and the provision of functional clothing. The entity insulated according to the inventive method may be a component pertaining to one or more of said fields.

For example, according to preferred embodiments, the insulation material according to the present invention is configured to be used to at least partially cover or envelop a component such as an aviation engine, elements of a hypersonic vehicle, an engine of a vehicle, a cryogenic vessel (in particular, a fuel tank of a spacecraft). In respective embodiments of the method according to the present invention, the entity is such a component.

Moreover, the insulation material according to the present invention may be used as a material for spacesuit and/or for clothes to be used in other extreme environments, e.g., for a firefighter suit or for an alpine gear. In respective embodiments of the method according to the present invention, the entity may be a creature, in particular a person.

The polyimide included in the plurality of layered sheets including the polyimide aerogel may be a polymer of imide monomers. In embodiments comprising a plurality of such sheets, the respectively comprised polyimide aerogels may be equal, or at least two of these sheets may comprise different polyimide aerogels.

To allow for air passage, at least one of the plurality of layered sheets, in particular at least one sheet comprising polyimide aerogel (such as the one or more at least partially coated polyimide aeroel film) or - if present - sheets comprising a conventional polyimide film may be perforated.

As is to be understood, each of the terms "at least one of the plurality of layered sheets" and "at least one of the one or more flexible, at least partially coated polyimide aerogel film/s" as used in this document may, in respective combined embodiments, refer to different sheets/films each having a respective property or to a sheet/ film having various of the properties respectively mentioned.

According to a preferred embodiment of the present invention, the insulation material is flexible. It may be configured as a blanket. Accordingly, the insulation material can be easily handled (e.g. folded, gathered and/or sewed) and utilised, such as for at least partially enveloping an element.

In particular, the insulation material may be configured as an MLI material. According to an embodiment, the insulation material comprises at most 100, at most 70 or at most 50 layered sheets. Additionally or alternatively, it may comprise at least 3, at least 6, at least 12 or at least 18 sheets.

The insulation material according to the present invention may comprise, as at least one of the plurality of layered sheets, a (conventional) polyimide film which may be at least partially metallised. In such case, the insulation material thus comprises both the one or more at least partially coated flexible film comprising polyimide aerogel and the at least one conventional polyimide film. Such embodiments may be advantageous depending on the respectively intended application, as they exhibit advantageous properties of the polyimide aerogel, may have a particularly small thickness and/or may include a particularly high number of layered sheets.

Additionally or alternatively, the insulation material according to the present invention may comprise, as an outmost layer constituting at least a portion of one or both surfaces of the material, a protective cover being a fabric layer or a film layer. The protective cover may be made of polyethylene terephthalate (PET), polyether ether ketone (PEEK) and/or polyimide, and/or it may comprise ceramic fibres or aramid fibres. The protective cover may be configured to protect the insulation material, such as - in respective applications - against damages due to collisions with micrometeorites or orbital debris (MMOD).

In cases where the insulation material comprises such one or more protective film layer(s) comprising polyimide, this (outmost) layer(s) may be the only layer(s) of the insulation material which include/s a conventional polyimide film, or at least one further conventional polyimide film may be included.

In such embodiments comprising a conventional polyimide film, a thickness thereof preferably is at least 8µm, as such films are currently not subject to ITAR restrictions.

According to an alternative advantageous embodiment, the inventive insulation material is devoid of any (conventional) polyimide films. As ITAR does not cover polyimide aerogel, the latter embodiment facilitates a freely applicable and advantageous alternative to materials such as traditional MLI materials.

The insulation material according to the present invention may comprise, as one or more of the plurality of layered sheets, at least one spacer sheet. Such spacer sheet is adjacent (i.e., neighbouring) to each of two further sheets and arranged between said further sheets, where it inhibits thermal contact of said two sheets.

At least one of the one or more spacer sheets may be a conventional spacer sheet. It may be made of a fabric such as gauze and/or cloth scrim, and/or it may include glass fibres, plastic fibres, and/or natural fibres.

Additionally or alternatively, at least one of the one or more spacer sheets may comprise aerogel. It may be uncoated at least in a surface region facing a coated region of one of said two adjacent sheets, or it may be at least partially covered with a reflective coating. In particular, said at least one spacer sheet may be (the) one of the one or more at least partially coated flexible polyimide aerogel films. The coating may comprise at least one region having an uneven surface, e.g. maintaining elevations and/or depressions in the surface of the polyimide aerogel: Such uneven surface may provide for interspaces between the spacer sheet and a respective neighboring sheet, so as to inhibit or at least reduce thermal contact. The coating may be comprise a metal (e.g., aluminium, silver and/or gold) applied by physical vapour deposition. The (coated or uncoated) spacer sheet may be shaped as a grid including a plurality of cut-outs; if so, the total area of the cut-outs is preferably at most 1/3 or at most 1/2 of the total area extension of the spacer sheet.

Such embodiments facilitate particularly low areal density (mass per surface area). Moreover, they exhibit a particularly low heat transfer coefficient (HTC). Due to a buffer effect of the polyimide aerogel included in the spacer sheet, these embodiments provide a better protection against micrometeorites and orbital debris (MMOD) than conventional MLI materials.

In particular, any spacer included in the insulation material may be such spacer sheet (comprising polyimide aerogel), such that the insulation material is devoid of any conventional spacer, or the insulation material may include both types of spacers (i.e., alt least one conventional spacer sheet and at least one spacer sheet comprising polyimide aerogel). For example, the insulation material may include at least one first sheet and at least one second sheet both acting as a spacer. The at least one first sheet may be positioned more at a side of the insulation material where radiation dominates than the at least one second spacer sheet. The at least one first sheet may then be conventional, whereas the at least one second sheet is a spacer sheet (comprising polyimide aerogel), or vice versa. The insulation material may thus be particularly adapted to conditions of its respective intended utilisation.

According to a preferred embodiment of the present invention, at least one of the one or more flexible and at least partially coated polyimide aerogel film/s has a mean thickness of at least 8µm, at least 15µm or at least 35µm. Additionally or alternatively, (the) at least one of the plurality of layered sheets may have a mean thickness of at most 1mm, at most 0.7mm, at most 0.3mm, at most 75µm or at most 60µm. As expressed above with respect to the term "at least one of the one or more flexible and at least partially coated polyimide aerogel film/s", in respective embodiments, the sheet having a mean thickness in the mentioned ranges may, in particular, be at least one at least partially coated aerogel film and/or the at least one spacer sheet.

Having a mean thickness in said range, the sheet comprising polyimide aerogel exhibits very low heat conductivity and is particularly lightweight. Depending on the respective application, a large number of layered sheets may be advantageous as long as the total thickness of the material does not exceed a certain maximum, which may be achieved with said upper limits of the thickness.

At least one of the one or more flexible and at least partially coated polyimide aerogel film/s may have an essentially uniform thickness at least throughout a zone of the sheet. Such sheet is easy to produce and may, in combination to the further sheets, provide for a uniform thickness of the insulation material.

Additionally or alternatively, at least one of the one or more flexible and at least partially coated polyimide aerogel film/s may include at least two zones with different respective (mean) thicknesses. The thickness may vary so as to form an insulation material which on the whole likewise may have a non-uniform thickness, as may be in accordance with a respective application of the insulation material. Additionally or alternatively, the at least one film may include one or more main zone/s and, in at least one particularly stressed region, a respective strengthened zone/s, wherein the at least one strengthened zone has a larger (mean) thickness than the main zone/s. The insulation material may thus be particularly robust.

Preferably, such zones each have an extension of at least 1cm², at least 25cm², at least 100cm² or at least 400cm².

The one or more at least partially coated flexible polyimide aerogel films may have an essentially uniform porosity at least throughout a portion of the respective film. Such sheet is easy to produce and may, in combination to the further sheets, provide for uniform insulation properties of the insulation material.

Additionally or alternatively, at least one of the one or more at least partially coated flexible polyimide aerogel films may include at least two portions/ regions differing from each other by respective porosities of the comprised polyimide aerogel. For instance, the porosity may vary so as to form an insulation material having a non-uniform insulation property, as may be in accordance with a respective application of the insulation material.

Preferably, such regions each have an extension of at least 1cm², at least 25cm², at least 100cm² or at least 400cm².

The one or more at least partially coated flexible polyimide aerogel films included in the insulation material may all have essentially a same mean thickness and/or porosity. This allows for a simple fabrication of the insulation material and a universal applicability thereof.

According to an advantageous embodiment of the present invention, two or more of at least partially coated flexible polyimide aerogel films differ from each other with regard to their respective mean thickness and/or the porosity (of the respectively comprised polyimide aerogel).

For instance, the insulation material may comprise at least two spacer sheets comprising polyimide aerogel as mentioned above, wherein a first one of the spacer sheets has another mean thickness and/or porosity than a second one. Analogously, the insulation material may (additionally or alternatively) comprise two or more at least partially coated flexible polyimide aerogel films having different mean thicknesses and/or porosities. As a further possibility, the insulation material may include at least one spacer sheet and one or more at least partially coated flexible polyimide aerogel films, wherein the spacer sheet(s) has/have another mean thickness and/or porosity than the at least partially coated flexible sheet(s).

Thereby, a concept of varying densities of the insulation material is easy to implement: The sheets of different thicknesses and/or porosities may be arranged, in the insulation material, according to a respective application thereof.

For instance, the insulation material may include at least one first at least partially coated flexible polyimide aerogel film and at least one second at least partially coated flexible polyimide aerogel film. The at least one first at least partially coated flexible polyimide aerogel film may be positioned at a side of the insulation material where (in application) radiation dominates, whereas the at least one second at least partially coated flexible polyimide aerogel film may be arranged at a side where (in application) conduction dominates. To allow further mass optimisation, said at least one first film may then be thinner than said at least one second film. Alternatively, e.g. in cases where the multilayer insulation material serves as an external insulation for a launch vehicle when increasing thermodynamic loads occur, the at least one first film may preferably be thicker than the at least one second film. Additionally or alternatively, the polyimide aerogel included in the first film may have a smaller or a higher mean porosity than the polyimide aerogel included in the second film.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and are not defined again for each figure.

Shown is schematically in
- Fig. 1:: a portion of a first exemplary embodiment of an insulation material according to the present invention;
- Fig. 2:: a portion of a second exemplary embodiment of an insulation material according to the present invention; and
- Fig. 3:: a portion of a third exemplary embodiment of an insulation material according to the present invention;
- Fig. 4:: a portion of a fourth exemplary embodiment of an insulation material according to the present invention; and
- Fig. 5:: a possible configuration of a spacer sheet.

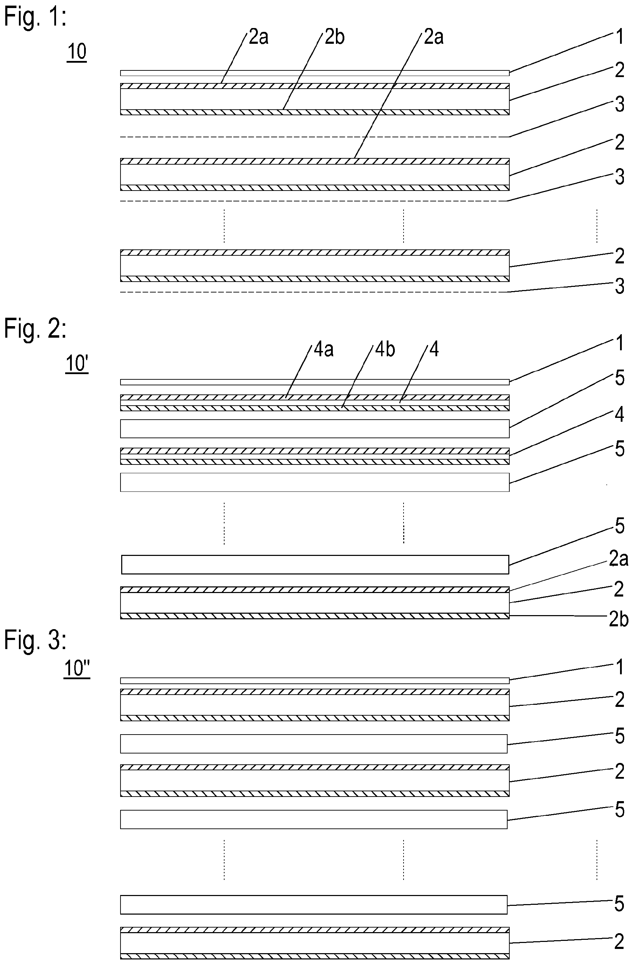

In Figure 1, an insulation material 10 according to a first exemplary embodiment of the present invention is depicted in a sectional view. The insulation material 10 (as well as, analogously, insulation materials 10', 10", 10''' shown in Figures 2, 3 and 4 and described below) serves to thermally and/or acoustically insulate a respective entity it may envelop, shield and/or cover. It is configured as an MLI material composed of a plurality of layered sheets.

An outmost one of the sheets is a protective cover 1. The protective cover 1 may be a film comprising PET, PEEK and/or polyimide, or it may be a fabric made of ceramic fibres and/or fiberglass, aramid fibres or any other fabric or coating appropriate for the application. It may serve to protect the insulation material, as well as to provide favourable thermo-optical properties for some applications. Preferably, the protective cover is configured to face, in application, an exterior environment of an enveloped, shielded and/or covered entity; according to a preferred embodiment of the inventive method, the insulation material 10 is arranged accordingly, with the cover fabric 1 facing outwards.

The insulation material 10 further comprises a plurality of layered sheets 2 and 3 of two types arranged alternately stacked. Three sheets 2 and 3 are respectively depicted, further ones may be included, as indicated, in the figure, by vertically arranged dots.

Sheets 2 are flexible polyimide aerogel films. In the shown example, at least in the portion depicted, each sheet 2 has a uniform thickness, and all sheets 2 have the same thickness. Such thickness may preferably be at least 8µm, at least 15µm or at least 35µm, and/or at most 1mm, at most 0.7mm, at most 0.3mm, at most 75µm or at most 60µm.

On both of their respective opposite surfaces, the sheets 2 have a coating 2a, 2b reflective to thermal radiation, such as metal, in particular aluminium, silver and/or gold. The coating may, for instance, be applied by means of a physical vapour deposition method.

Sheets 3 further included in the insulation material 10 are conventional spacers configured to inhibit thermal contact of adjacent sheets 2, in particular to inhibit physical contact of the coatings 2a, 2b of respective corresponding sheets 2 facing the respective sheet 3.

In comparison to a conventional MLI material, the sheets 2 comprising a polyimide aerogel film replace conventional PET, PEEK, polyimide or other films. As a consequence, the insulation material 10 can be constructed with less weight and a lower heat transfer coefficient than a conventional MLI material with the same number of layers.

At the surface opposite to the protective cover 1, the insulation material 10 might comprise a further protective cover (not shown), which may be a protective film (e.g. comprising PET, PEEK or polyimide). Such protective cover may be at least partially coated with reflective coatings on one or both of its surfaces.

In Figure 2, an insulation material 10' according to an alternative embodiment of the present invention is shown, which is likewise configured as an MLI material composed of a plurality of layered sheets. It includes a protective cover 1 which may have the properties and which may be used as described above with respect to Figure 1.

Moreover, the insulation material 10' comprises conventional sheets being polyimide films 4, which are at least partially coated, preferably metallised, e.g. with aluminium, silver and/or gold and/or by application of a physical vapour deposition method.

Additionally, the insulation material 10' comprises at least one sheet 2 being a flexible, at least partially coated polyimide aerogel film as described with respect to Figure 1.

In the exemplary embodiment shown in Figure 2, sheets 5 comprise (or even consist of) polyimide aerogel, and they act as spacers inhibiting thermal contact of adjacent sheets 4, in particular to inhibit physical contact of the coatings 4a, 4b, 2b of respective sheets 4, 2 facing the respective sheet 5.

In the present case, the spacer sheets 5 each have a uniform thickness (in the shown portion), and all sheets 5 have the same thickness. Such thickness may preferably be at least 8µm, at least 15µm or at least 35µm, and/or at most 1mm, at most 0.7mm, at most 0.3mm, at most 75pm or at most 60µm.

As compared to conventional MLI materials, the insulation material 10' may be constructed with an even lower areal density, and, due to the buffer effect of the spacer sheets 5, so as to provide a better protection against micrometeorites and orbital debris. Moreover, due to the low heat conductivity of the spacer sheets 5, it may exhibit a lower heat transfer coefficient than a traditional MLI material having the same number of layered sheets.

Again, at the surface opposite to the protective cover 1, the insulation material 10' might comprise a further protective cover (not shown), as mentioned above with respect to Figure 1.

In Figure 3, a portion of a third embodiment of an inventive insulation material 10" is shown. Further to a protective cover 1 (which may have the properties and which may be used as described above with regard to Figure 1), the insulation material 10" comprises sheets 2, 5 as described above, wherein the sheets are stacked alternatingly. Three sheets of each type are depicted, further ones may be included, as indicated, in the figure, by vertically arranged dots.

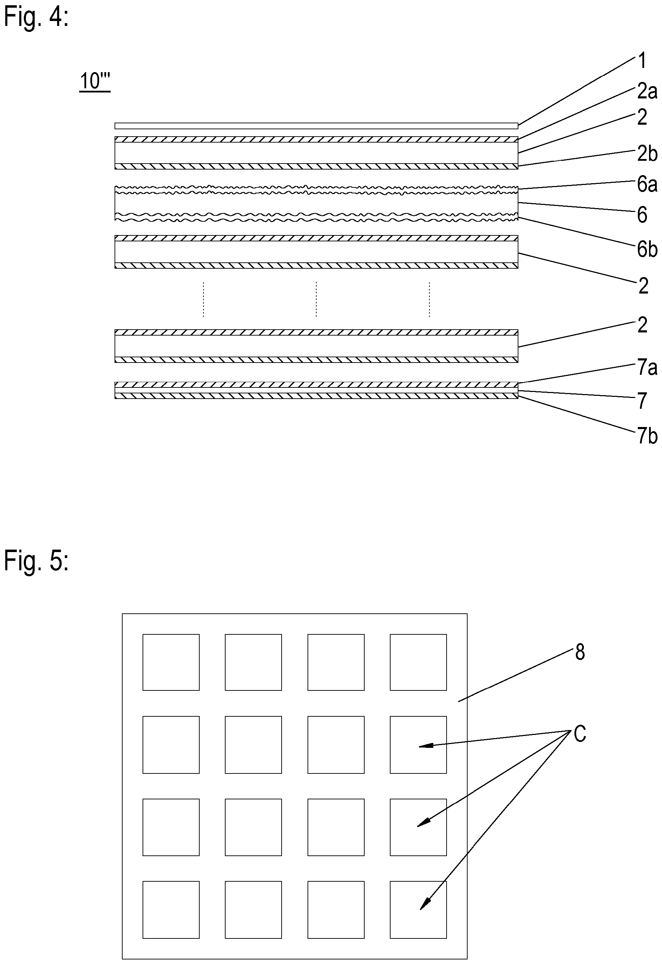

Figure 4 shows a further insulation material 10''' being an exemplary embodiment of the present invention. The insulation material 10''' comprises a protective cover 1 and a plurality of at last partially coated flexible polyimide aerogel films 2 as described above with respect to Figure 1.

At the surface opposite to the protective cover 1, the insulation material 10''' comprises a further protective cover 7, which in the case depicted is a protective film (e.g. of PET, PEEK or polyimide). The protective cover 7 is at least partially coated with reflective coatings 7a, 7b on both of its surfaces.

The insulation material 10''' further comprises at least one spacer sheet 6 comprising polyimide aerogel and reflective coatings 6a, 6b. Therein, the coatings 6a, 6b have an uneven surface, resulting from the coatings at least partially maintaining elevations and suppressions in the surface of the polyimide aerogel they cover. The unevenness provides for interspaces between the spacer sheet 6 and the respective neighbouring sheets 2, which inhibit or at least reduce thermal contact.

The coatings 6a, 6b, 7a, 7b each may comprise a metal such as aluminium, silver and/or gold. Preferably, they may have been applied by physical vapour deposition.

Figure 5 shows a plan view of a possible spacer sheet 8 comprising polyimide aerogel. The spacer sheet 8 comprises a plurality of cut-outs, three of which are exemplarily identified by reference sign C. In the exemplary embodiment depicted, the cut-outs are shaped as squares. As is to be understood, a spacer sheet may additionally or alternatively comprise cut-outs with one or more other geometric shape(s), such as disc(s). Preferably, a total area of the cut-outs is at most 1/3 or at most 1/2 of the total area extension of the sheet 8 (including the cut-outs). The cut-outs provide for interspaces between neighbouring sheets and, therewith, for an improved reduction of thermal contact.

The spacer sheet 8 may be configured as each of spacer sheets 5 and 6 described above. In particular, it may be uncoated or at least partially covered with a reflective coating as described above.

Disclosed is an insulation material for thermal and/or acoustic insulation. The insulation material comprises a plurality of layered sheets including one or more flexible polyimide aerogel film/s being at least partially covered with a reflective coating on one or both of its surfaces.

Further disclosed is a method for thermally and/or acoustically insulating an entity. The method comprises at least partially shielding, covering and/or enveloping the entity with an insulation material according to an embodiment of the present invention.

### Reference signs

- 1: protective cover
- 2: at least partially coated flexible polyimide aerogel film
- 2a, 2b: coating of sheet 2
- 3: conventional spacer
- 4: conventional polyimide film
- 4a, 4b: coating of sheet 4
- 5: spacer sheet comprising polyimide aerogel
- 6: spacer sheet comprising polyimide aerogel
- 6a, 6b: coating of sheet 4
- 7: protective cover
- 7a, 7b: coating of sheet 7
- 8: spacer sheet

- 10, 10', 10", 10''': insulation material

- C: cut-outs in spacer sheet 8

## Claims

1. Insulation material (10, 10', 10'', 10"') for thermal and/or acoustic insulation, the insulation material comprising a plurality of layered sheets (1, 2, 3, 4, 5, 6, 7, 8) including one or more flexible polyimide aerogel film/s being at least partially covered with a reflective coating (2a, 2b, 4a, 4b, 6a, 6b, 7a, 7b) on one or both of its surfaces.

2. Insulation material according to claim 1, wherein at least one of the one or more flexible and at least partially coated polyimide aerogel film/s has a mean thickness of
- at most 1mm, at most 0.7mm, at most 0.3mm, at most 75pm or at most 60µm; and/or
- at least 8µm, at least 15µm or at least 35pm.

3. Insulation material according to one of claims 1 or 2,
- wherein at least one of one or more flexible and at least partially coated polyimide aerogel film/s has an essentially uniform thickness at least throughout a zone of the film and/or
- wherein at least one of the one or more flexible and at least partially coated polyimide aerogel film/s includes at least two zones of different respective mean thicknesses.

4. Insulation material according to one of the preceding claims,
- wherein at least one of the one or more flexible and at least partially coated polyimide aerogel film/s has an essentially uniform porosity at least throughout a portion of the respective sheet; and/or
- wherein at least one of the one or more flexible and at least partially coated polyimide aerogel film/s includes at least two portions with different respective porosities.

5. Insulation material according to one of the preceding claims, the insulation material including two or more sheets comprising polyimide aerogel, the two or more flexible at least partially coated polyimide aerogel film/s which have different mean sheet thicknesses and/or different mean porosities.

6. Insulation material according to one of the preceding claims, wherein the plurality of layered sheets includes one or more spacer sheets (5, 6) comprising polyimide aerogel.

7. Insulation material according to claim 6, wherein at least one of the one or more spacer sheets (6) is at least partially covered with a reflective coating (6a, 6b) on one or both of its surfaces, wherein the reflective coating comprises at least one region having an uneven surface.

8. Insulation material according to one of claims 6 or 7, wherein the one or more spacer sheets (5, 6) include at least one sheet (8) shaped as a grid including a plurality of cut-outs (C), wherein the total area of the cut-outs is preferably at most 1/3 or at most 1/2 of the total area extension of the sheet.

9. Insulation material according to one of the preceding claims, which is configured as a flexible MLI material.

10. Method for thermally and/or acoustically insulating an entity, the method comprising at least partially shielding, covering and/or enveloping the entity with an insulation material (10, 10', 10'', 10"') according to one of the preceding claims.

## Patentansprüche

1. Isoliermaterial (10, 10', 10", 10"') für thermische und/oder akustische Isolierung, wobei das Isoliermaterial eine Mehrzahl geschichteter Platten (1, 2, 3, 4, 5, 6, 7, 8) umfasst, die eine oder mehrere flexible Polyimidaerogelfolie/n umfassen, die mindestens teilweise mit einer reflektierenden Beschichtung (2a, 2b, 4a, 4b, 6a, 6b, 7a, 7b) auf einer oder beiden ihrer Oberflächen bedeckt ist/sind.

2. Isoliermaterial nach Anspruch 1, wobei mindestens eine der einen oder mehreren flexiblen und mindestens teilweise beschichteten Polyimidaerogelfolie(n) eine mittlere Dicke von
- höchstens 1 mm, höchstens 0,7 mm, höchstens 0,3 mm, höchstens 75 µm oder höchstens 60 pm; und/oder
- mindestens 8 µm, mindestens 15 µm oder mindestens 35 µm aufweist.

3. Isoliermaterial nach einem der Ansprüche 1 oder 2,
- wobei mindestens eine von einer oder mehreren flexiblen und mindestens teilweise beschichteten Polyimidaerogelfolie(n) eine im Wesentlichen gleichförmige Dicke mindestens durch eine Zone der Folie aufweist und/oder
- wobei mindestens eine der einen oder mehreren flexiblen und mindestens teilweise beschichteten Polyimidaerogelfolie(n) mindestens zwei Zonen verschiedener jeweiliger mittlerer Dicken aufweist.

4. Isoliermaterial nach einem der vorhergehenden Ansprüche,
- wobei mindestens eine der einen oder mehreren flexiblen und mindestens teilweise beschichteten Polyimidaerogelfolie(n) eine im Wesentlichen gleichförmige Porosität mindestens durch einen Teil der jeweiligen Platte hindurch aufweist; und/oder
- wobei mindestens eine der einen oder mehreren flexiblen und mindestens teilweise beschichteten Polyimidaerogelfolie(n) mindestens zwei Teile mit verschiedenen jeweiligen Porositäten aufweist.

5. Isoliermaterial nach einem der vorhergehenden Ansprüche, wobei das Isoliermaterial zwei oder mehr Platten umfasst, die Polyimidaerogel umfassen, wobei die zwei oder mehr flexiblen, mindestens teilweise beschichteten Polyimidaerogelfolie(n) verschiedene mittlere Plattendicken und/oder verschiedene mittlere Porositäten aufweisen.

6. Isoliermaterial nach einem der vorhergehenden Ansprüche, wobei die Mehrzahl geschichteter Platten eine oder mehrere Abstandhalterplatten (5, 6) umfasst, die Polyimidaerogel umfassen.

7. Isoliermaterial nach Anspruch 6, wobei mindestens eine von der einen oder den mehreren Abstandhalterplatten (6) mindestens teilweise mit einer reflektierenden Beschichtung (6a, 6b) auf einer oder beiden ihrer Oberflächen bedeckt ist, wobei die reflektierende Beschichtung mindestens einen Bereich umfasst, der eine ungleichmäßige Oberfläche aufweist.

8. Isoliermaterial nach einem der Ansprüche 6 oder 7, wobei die eine oder mehreren Abstandhalterplatten (5,6) mindestens eine Platte (8) umfasst/umfassen, die als Gitter, das eine Mehrzahl von Ausschnitten (C) umfasst, gestaltet ist, wobei der gesamte Bereich der Ausschnitte bevorzugt höchstens 1/3 oder höchstens 1/2 der gesamten Bereichsausdehnung der Platte beträgt.

9. Isoliermaterial nach einem der vorhergehenden Ansprüche, das als flexibles MLI-Material konfiguriert ist.

10. Verfahren zum thermischen und/oder akustischen Isolieren eines Gebildes, wobei das Verfahren mindestens teilweises Abschirmen, Bedecken und/oder Umhüllen des Gebildes mit einem Isoliermaterial (10, 10', 10", 10"') nach einem der vorhergehenden Ansprüche umfasst.

## Revendications

1. Matériau d'isolation (10, 10', 10", 10"') destiné à une isolation thermique et/ou acoustique, le matériau d'isolation comprenant une pluralité de feuilles en couches (1, 2, 3, 4, 5, 6, 7, 8) comprenant un ou plusieurs films d'aérogel en polyimide flexibles étant au moins partiellement recouverts d'un revêtement réfléchissant (2a, 2b, 4a, 4b ,6a, 6b, 7a, 7b) sur une de ses surfaces ou les deux.

2. Matériau d'isolation selon la revendication 1, dans lequel au moins un de l'un ou plusieurs films d'aérogel en polyimide flexibles et au moins partiellement revêtus a une épaisseur moyenne de
- 1 mm au maximum, 0,7 mm au maximum, 0,3 mm au maximum, 75 µm au maximum ou 60 µm au maximum ; et/ou
- au moins 8 µm, au moins 15 µm ou au moins 35 µm.

3. Matériau d'isolation selon l'une quelconque des revendications 1 ou 2,
- dans lequel au moins un de l'un ou plusieurs films d'aérogel en polyimide flexibles et au moins partiellement revêtus a une épaisseur sensiblement uniforme au moins sur toute une zone du film et/ou
- dans lequel au moins un de l'un ou plusieurs films d'aérogel en polyimide flexibles et au moins partiellement revêtus inclut au moins deux zones d'épaisseurs moyennes respectives différentes.

4. Matériau d'isolation selon l'une quelconque des revendications précédentes,
- dans lequel au moins un de l'un ou plusieurs films d'aérogel en polyimide flexibles et au moins partiellement revêtus a une porosité sensiblement uniforme au moins sur toute une partie de la feuille respective ; et/ou
- dans lequel au moins un de l'un ou plusieurs films d'aérogel en polyimide flexibles et au moins partiellement revêtus inclut au moins deux parties ayant des porosités respectives différentes.

5. Matériau d'isolation selon l'une quelconque des revendications précédentes, le matériau d'isolation comprenant deux ou plusieurs feuilles comprenant un aérogel de polyimide, les deux ou plusieurs films d'aérogel en polyimide flexibles et au moins partiellement revêtus qui ont des épaisseurs de feuille moyennes différentes et/ou des porosités moyennes différentes.

6. Matériau d'isolation selon l'une quelconque des revendications précédentes, dans lequel la pluralité de feuilles en couches comprend une ou plusieurs feuilles d'espacement (5, 6) comprenant un aérogel de polyimide.

7. Matériau d'isolation selon la revendication 6, dans lequel au moins l'une de l'une ou plusieurs feuilles d'espacement (6) est au moins partiellement recouverte d'un revêtement réfléchissant (6a, 6) sur une de ses surfaces ou les deux, dans lequel le revêtement réfléchissant comprend au moins une région ayant une surface irrégulière.

8. Matériau d'isolation selon l'une quelconque des revendications 6 ou 7, dans lequel l'une ou plusieurs feuilles d'espacement (5, 6) inclut au moins une feuille (8) en forme de grille comprenant une pluralité de découpes (C), dans lequel la surface totale des découpes représente de préférence 1/3 au maximum ou 1/2 au maximum de la surface totale d'extension de la feuille.

9. Matériau d'isolation selon l'une quelconque des revendications précédentes, qui est conçu comme un matériau MLI flexible.

10. Procédé d'isolation thermique et/ou acoustique d'une entité, le procédé comprenant au moins partiellement le blindage, le recouvrement et/ou l'enveloppement de l'entité à l'aide d'un matériau d'isolation (10, 10', 10", 10"') selon l'une quelconque des revendications précédentes.
